# EUROPEAN PATENT SPECIFICATION

(11) **EP 3 972 119 B1**
(45) Date of publication and mention of the grant of the patent: **31.05.2023**
(21) Application number: 21808838.3
(22) Date of filing: 06.04.2021
(51) Int. Cl.: H02P 6/32, B60L 53/24, H02M 3/335

(54) **ELECTRIC MOTOR DRIVING SYSTEM AND VEHICLE**
ANTRIEBSSYSTEM FÜR EINEN ELEKTROMOTOR UND FAHRZEUG
SYSTÈME DE COMMANDE DE MOTEUR ÉLECTRIQUE, ET VÉHICULE

(30) Priority: 21.05.2020 CN 202010438046
(43) Date of publication of application: 23.03.2022
(73) Proprietor: Huawei Digital Power Technologies Co., Ltd., Shenzhen, Guangdong 518043 (CN)
(72) Inventor: CHEN, Jinhua, Shenzhen, Guangdong 518129 (CN); YIN, Xiaode, Shenzhen, Guangdong 518129 (CN); WANG, Shaohua, Shenzhen, Guangdong 518129 (CN); CHENG, Yang, Shenzhen, Guangdong 518129 (CN); WU, Chaoqiang, Shenzhen, Guangdong 518129 (CN)
(74) Representative: Thun, Clemens
(86) International application number: PCT/CN2021/085629
(87) International publication number: WO 2021/232975

(56) References cited:
- WO-A1-2019/207525
- CN-A- 104 113 249
- CN-A- 109 728 624
- CN-A- 110 417 268
- CN-A- 111 510 030
- CN-U- 206 690 886
- CN-U- 207 345 714
- US-A1- 2018 278 168
- US-A1- 2019 148 973
- US-B1- 7 112 944
- US-B2- 10 243 388

## Description

### TECHNICAL FIELD

This application relates to the vehicle control field, and in particular, to a motor-driven system and a vehicle

### BACKGROUND

A motor system is a core component of a new energy vehicle. A future motor system is developing toward high efficiency, low costs, and a small size. An excitation generator has characteristics such as being capable of using no or a small quantity of permanent magnets, adjustable excitation, and wide-range speed control. When the excitation generator is used in the motor system, a drive component such as a carbon brush structure or a wireless transformer is usually used to drive the excitation generator In addition, a voltage conversion circuit and a corresponding drive control circuit are further disposed between an electricity storage unit and the drive component. Such an existing motor-driven system has a complex structure and high costs.

The document US 10 243 388 B2 shows a charging system using a wound rotor synchronous motor wherein the charging system is configured to supply a rotor field coil of the motor in a drive mode with current from the battery according to the preamble of the independent claims.

The document US 2018/278168 A1 shows an apparatus to realize fast battery charging and motor driving for electric vehicles using only a single AC/DC converter.

The document CN 109 728 624 A shows a vehicle charging and discharging system.

The document US 2019/148973 A1 shows a circuit for charging and for low-voltage conversion for electric vehicles.

The document WO 2019/207525 A1 shows the construction of a synchronous induction motor.

### SUMMARY

The present invention is defined by the independent claims. Further advantageous developments are shown by the dependent claims.

Technical solutions of this application provide a motor-driven system and a vehicle, to simplify a structure of the motor-driven system and reduce costs.

According to a first aspect, the technical solutions of this application provide a motor-driven system, including: a bidirectional charger, where the bidirectional charger includes: a power factor correction circuit, where a first terminal of the power factor correction circuit is configured to electrically connect to a charging port; a first voltage conversion circuit, where a first terminal of the first voltage conversion circuit is electrically connected to a second terminal of the power factor correction circuit, the first terminal of the first voltage conversion circuit is configured to input or output a direct current, and a second terminal of the first voltage conversion circuit is configured to input or output an alternating current; a first transformer, where a first terminal of the first transformer is electrically connected to the second terminal of the first voltage conversion circuit; and a second voltage conversion circuit, where a first terminal of the second voltage conversion circuit is electrically connected to a second terminal of the first transformer, the first terminal of the second voltage conversion circuit is configured to input or output an alternating current, a second terminal of the second voltage conversion circuit is configured to output or input a direct current, and the second terminal of the second voltage conversion circuit is configured to electrically connect to an electricity storage unit. The motor-driven system further includes an excitation drive component, where the excitation drive component is electrically connected to a multiplexing node by using a first switch unit, the multiplexing node is located between the power factor correction circuit and the first voltage conversion circuit, and the excitation drive component is configured to drive an excitation generator.

Optionally, the excitation drive component includes a carbon brush or a slip ring, an input terminal of the carbon brush or the slip ring is electrically connected to the multiplexing node by using the first switch unit, and an output terminal of the carbon brush or the slip ring is configured to transmit electric energy to the excitation generator.

Optionally, the motor-driven system further includes a second switch unit. The second switch unit is disposed between the power factor correction circuit and the first voltage conversion circuit, and the multiplexing node is electrically connected to the second terminal of the power factor correction circuit by using the second switch unit.

According to a second aspect, the technical solutions of this application further provide a motor-driven system, including: a bidirectional charger, where the bidirectional charger includes: a power factor correction circuit, where a first terminal of the power factor correction circuit is configured to electrically connect to a charging port; a first voltage conversion circuit, where a first terminal of the first voltage conversion circuit is electrically connected to a second terminal of the power factor correction circuit, the first terminal of the first voltage conversion circuit is configured to input or output a direct current, and a second terminal of the first voltage conversion circuit is configured to input or output an alternating current; a first transformer, where a first terminal of the first transformer is electrically connected to the second terminal of the first voltage conversion circuit; and a second voltage conversion circuit, where a first terminal of the second voltage conversion circuit is electrically connected to a second terminal of the first transformer, the first terminal of the second voltage conversion circuit is configured to input or output an alternating current, a second terminal of the second voltage conversion circuit is configured to output or input a direct current, and the second terminal of the second voltage conversion circuit is configured to electrically connect to an electricity storage unit. The motor-driven system further includes an excitation drive component, where the excitation drive component is electrically connected to a multiplexing node by using a first switch unit, the multiplexing node is located between the first voltage conversion circuit and the second voltage conversion circuit, and the excitation drive component is configured to drive an excitation generator.

Optionally, the excitation drive component includes: a wireless power transmission transformer, where a primary side of the wireless power transmission transformer is electrically connected to the multiplexing node by using the first switch unit, and a secondary side of the wireless power transmission transformer is configured to receive electric energy transmitted by the primary side of the wireless power transmission transformer; and an excitation rectification circuit, where an input terminal of the excitation rectification circuit is electrically connected to the secondary side of the wireless power transmission transformer, and an output terminal of the excitation rectification circuit is configured to electrically connect to the excitation generator.

Optionally, the multiplexing node is located between the first transformer and the second voltage conversion circuit.

Optionally, the motor-driven system further includes a second switch unit. The second switch unit is disposed between the power factor correction circuit and the second voltage conversion circuit, and the multiplexing node is electrically connected to the second terminal of the first transformer by using the second switch unit.

Optionally, the motor-driven system further includes a first resonant unit, where the first resonant unit is electrically connected between the multiplexing node and the second voltage conversion circuit.

Optionally, the motor-driven system further includes: a motor controller configured to control the excitation generator, and a charging controller configured to control the bidirectional charger. The charging controller and the motor controller are in a communication connection, and the charging controller is further configured to: when the bidirectional charger is in a bidirectional charging mode, control the first switch unit to be off; and when the charging controller receives a vehicle start signal, control the first switch unit to be on.

Optionally, the motor-driven system further includes: a motor controller configured to control the excitation generator, and a charging controller configured to control the bidirectional charger. The charging controller and the motor controller are in a communication connection, and the charging controller is further configured to: when the bidirectional charger is in a bidirectional charging mode, control the first switch unit to be off and control the second switch unit to be on; and when the charging controller receives a vehicle start signal, control the first switch unit to be on and control the second switch unit to be off.

Optionally, the power factor correction circuit is a power factor correction circuit for a two-phase alternating current or a power factor correction circuit for a three-phase alternating current.

According to a third aspect, the technical solutions of this application provide a vehicle, and the vehicle includes an excitation generator and the foregoing motor-driven system.

In the motor-driven system and the vehicle according to the embodiments of this application, the multiplexing node is connected by using the first switch, and the multiplexing node is located between the second voltage conversion circuit in the bidirectional charger and the charging port. In other words, a partial circuit that is in the bidirectional charger and that includes at least the second voltage conversion circuit may be multiplexed as a structure of a partial circuit required by the excitation generator. The partial circuit in the bidirectional charger is used in an integrated manner of time division multiplexing, so that a circuit structure in the motor-driven system is simplified, costs are reduced, a weight and a size of the motor-driven system are reduced, and a thermal energy loss is reduced. This can effectively increase endurance of the vehicle.

### BRIEF DESCRIPTION OF DRAWINGS

FIG. 1 is a schematic diagram of a circuit structure of a motor-driven system;
FIG. 2 is a schematic diagram of a circuit structure of another motor-driven system;
FIG. 3 is a schematic diagram of a circuit structure of a charging part of a motor-driven system;
FIG. 4 is a block diagram of a structure of a motor-driven system according to an embodiment of this application;
FIG. 5 is a block diagram of a structure of another motor-driven system according to an embodiment of this application;
FIG. 6 is a block diagram of a structure of another motor-driven system according to an embodiment of this application;
FIG. 7 is a schematic diagram of a circuit structure corresponding to the motor-driven system in FIG. 6;
FIG. 8 is a schematic diagram of a circuit structure corresponding to the motor-driven system in FIG. 5;
FIG. 9 is a schematic diagram of another circuit structure corresponding to the motor-driven system in FIG. 5; and
FIG. 10 is a schematic diagram of another circuit structure corresponding to the motor-driven system in FIG. 6.

### DESCRIPTION OF EMBODIMENTS

Terms used in implementation of this application are merely used to explain specific embodiments of this application, and are not intended to limit this application.

Before the embodiments of this application are described, a discovery process in the embodiments of this application is briefly described first.

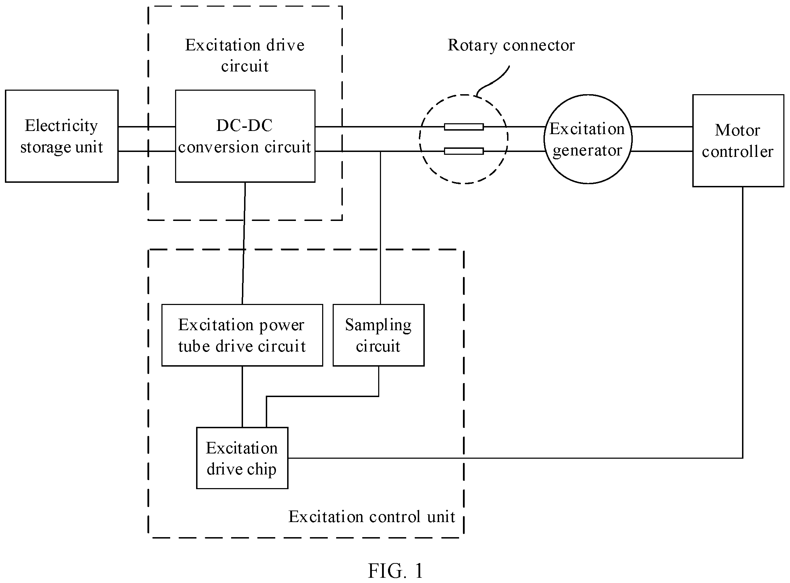

FIG. 1 is a schematic diagram of a circuit structure of a drive part of a motor-driven system. The structure shown in FIG. 1 includes an excitation drive circuit, a rotary connector, an electricity storage unit, an excitation control unit, and a motor controller. The excitation drive circuit includes a DC-DC conversion circuit. The excitation drive circuit is used to convert electric energy of the electricity storage unit into an adjustable direct current, and the direct current generated by the excitation drive circuit is transmitted to a rotor of an excitation generator by using a rotary connector structure such as a carbon brush or a slip ring, to implement electric excitation. The excitation control unit includes an excitation power tube drive circuit, a sampling circuit, and an excitation drive chip. The rotary connector such as a carbon brush or a slip ring is used to connect the rotor to the excitation drive circuit, so that a structure is simple, and a size can be appropriately reduced. However, a service life of the carbon brush, the slip ring, or the like is extremely limited, and properties such as electrical noise, a wear rate, and contact resistance of the carbon brush, the slip ring, or the like are unsatisfactory. Consequently, reliability is greatly reduced. Therefore, in the motor-driven system using an excitation system such as the carbon brush, for a simple structure and a small size, reliability is sacrificed, and costs are also increased.

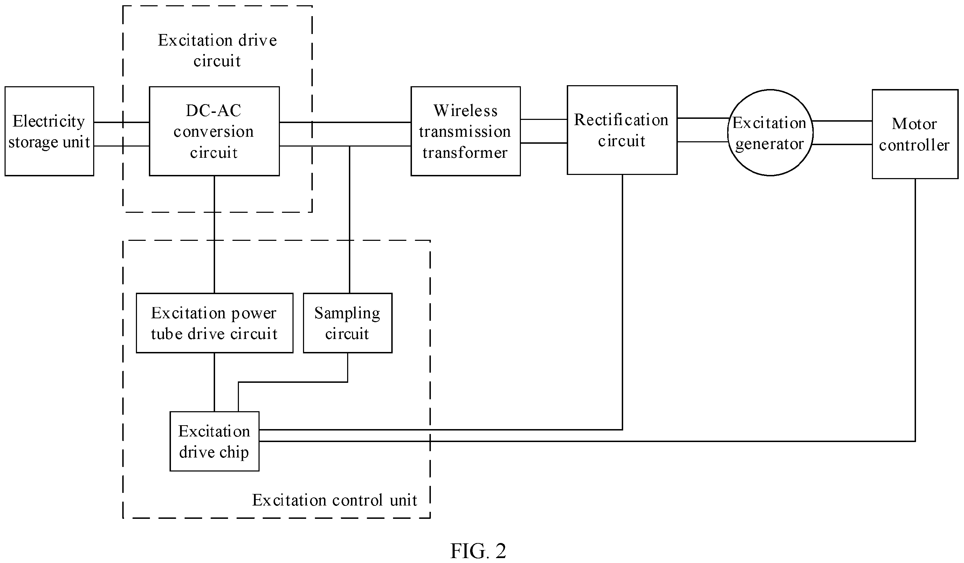

FIG. 2 is a schematic diagram of a structure of a drive part of another motor-driven system. The structure shown in FIG. 2 includes an excitation drive circuit, a wireless transmission transformer, a rectification circuit, an electricity storage unit, an excitation control unit, and a motor controller. Main differences between the structures shown in FIG. 2 and FIG. 1 are as follows: The excitation drive circuit in FIG. 2 includes a DC-AC conversion circuit that converts electric energy of the electricity storage unit into a high-frequency alternating current and transmits the high-frequency alternating current to a primary side of the wireless transmission transformer; a secondary side of the wireless transmission transformer is mounted on a rotor of an excitation drive motor; the primary side and the secondary side of the wireless transmission transformer are not in contact with each other; electric energy is transmitted in a wireless transmission manner; the rectification circuit is further disposed on the rotor of the motor to convert an alternating current received by the secondary side of the wireless transmission transformer into a direct current; and the excitation control unit includes an excitation power tube drive circuit, a sampling circuit, and an excitation drive chip. In the wireless transmission manner, reliability of excitation current transmission is increased, but costs of the wireless transmission transformer and costs of the rectification circuit are also increased.

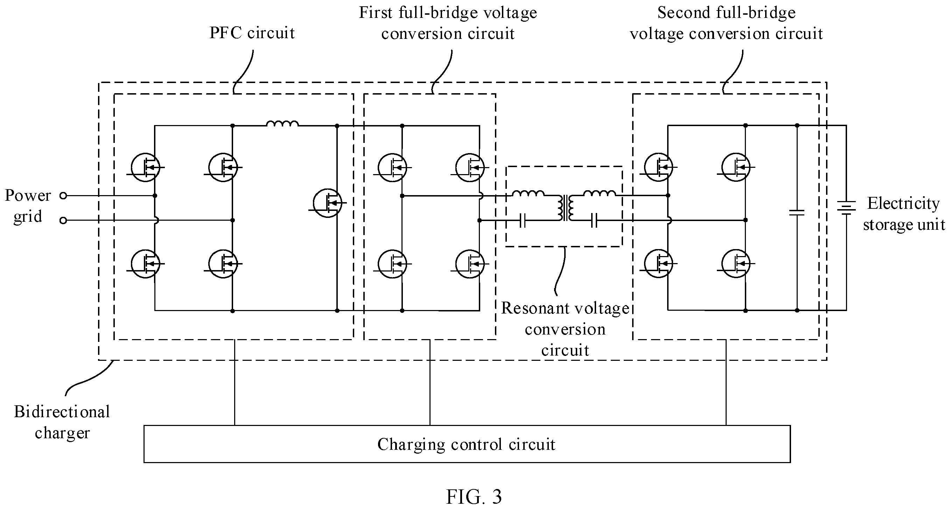

FIG. 3 is a schematic diagram of a structure of a charging part of a motor-driven system. The structure shown in FIG. 3 includes a bidirectional charger, an electricity storage unit, and a charging control circuit. The bidirectional charger includes a power factor correction (Power Factor Correction, PFC) circuit, a first full-bridge voltage conversion circuit, a resonant voltage conversion circuit, and a second full-bridge voltage conversion circuit. The charging control circuit is configured to control components in the bidirectional charger. The bidirectional charger is configured to implement bidirectional charging between a power grid and the electricity storage unit; to be specific, the bidirectional charging includes charging from the power grid to the electricity storage unit and charging from the electricity storage unit to the power grid. The bidirectional charger is a bidirectional on-board charger (On-board Charger, OBC).

In an embodiment of the present invention, a drive part used to drive a motor is a DC-DC conversion circuit or a DC-AC conversion circuit. The second full-bridge conversion circuit in the bidirectional charger may convert a direct current output by the electricity storage unit into an alternating current; in other words, a DC-AC conversion function is implemented. A part including the first full-bridge voltage conversion circuit, the resonant voltage conversion circuit, and the second full-bridge voltage conversion circuit may convert the direct current output by the electricity storage unit into a direct current; in other words, a DC-DC conversion function is implemented. Therefore, through time division multiplexing and by using a partial circuit in the bidirectional charger, a voltage conversion function required for charging can be implemented in a bidirectional charging process, and a voltage conversion function required for driving can be implemented in a driving process of the motor. In this way, an excitation drive circuit does not need to be disposed, to simplify a structure of the motor-driven system and reduce costs. A motor-driven system and a vehicle according to the embodiments of this application are described below by using specific embodiments.

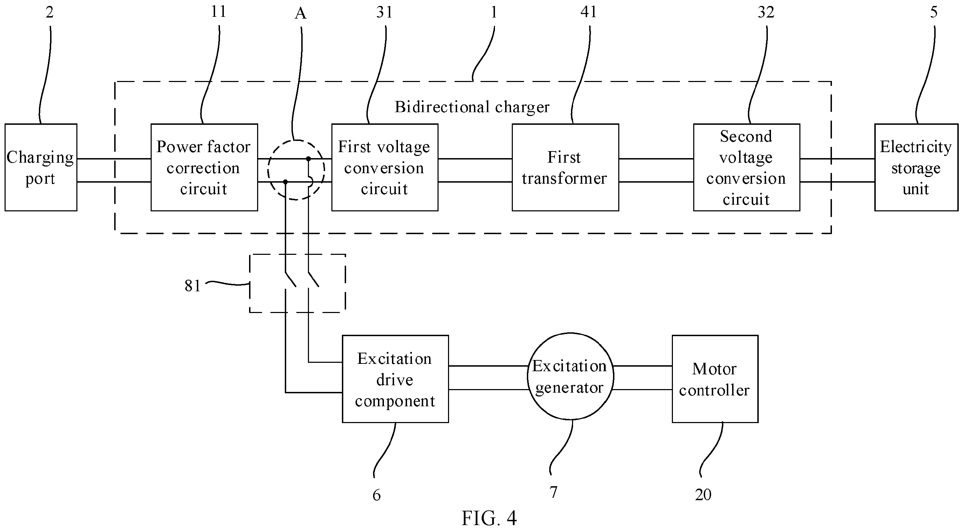

FIG. 4 is a block diagram of a structure of a motor-driven system according to an embodiment of this application. This embodiment of this application provides a motor-driven system, including a bidirectional charger 1, an excitation drive component 6, and a motor controller 20. In addition, FIG. 4 further shows an excitation generator 7 that needs to be driven by the motor-driven system, and an electricity storage unit 5 that is configured to provide electric energy in a driving process. The bidirectional charger 1 includes: a power factor correction circuit 11, where a first terminal of the power factor correction circuit 11 is electrically connected to a charging port 2; a first voltage conversion circuit 31, where a first terminal of the first voltage conversion circuit 31 is electrically connected to a second terminal of the power factor correction circuit 11, the first terminal of the first voltage conversion circuit 31 is configured to input or output a direct current, and a second terminal of the first voltage conversion circuit 31 is configured to input or output an alternating current, in other words, the first voltage conversion circuit 31 is configured to convert a direct current of the first terminal of the first voltage conversion circuit 31 into an alternating current of the second terminal of the first voltage conversion circuit 31 or convert an alternating current of the second terminal of the first voltage conversion circuit 31 into a direct current of the first terminal of the first voltage conversion circuit 31; a first transformer 41, where a first terminal of the first transformer 41 is electrically connected to the second terminal of the first voltage conversion circuit 31, and the first transformer 41 is configured to convert a voltage of an alternating current; and a second voltage conversion circuit 32, where a first terminal of the second voltage conversion circuit 32 is electrically connected to a second terminal of the first transformer 41, the first terminal of the second voltage conversion circuit 32 is configured to input or output an alternating current, and a second terminal of the second voltage conversion circuit 32 is configured to input or output a direct current, in other words, the second voltage conversion circuit is configured to convert an alternating current of the first terminal of the second voltage conversion circuit into a direct current of the second terminal of the second voltage conversion circuit or convert a direct current of the second terminal of the second voltage conversion circuit into an alternating current of the first terminal of the second voltage conversion circuit, and the second terminal of the second voltage conversion circuit 32 is configured to electrically connect to the electricity storage unit 5. The excitation drive component 6 is electrically connected to a multiplexing node A by using a first switch unit 81, the multiplexing node A is located between the charging port 2 and the second voltage conversion circuit 32 in the bidirectional charger 1, the excitation drive component 6 is configured to drive the excitation generator 7, and the motor controller 20 is configured to control the excitation generator 7.

Specifically, in the structure shown in FIG. 4, a first terminal of each circuit or component is a left terminal of each circuit or component, and a second terminal of each circuit or component is a right terminal of each circuit or component. The motor-driven system has two working modes: a bidirectional charging mode and a motor-driven mode. When the motor-driven system works in the bidirectional charging mode, the first switch unit 81 is off; in other words, the multiplexing node and the excitation generator 7 are disconnected. The bidirectional charging mode includes a first charging mode and a second charging mode. The first charging mode is a mode in which the charging port 2 (the charging port 2 may be connected to a power grid) charges the electricity storage unit 5. The second charging mode is a mode in which the electricity storage unit 5 charges the charging port 2 (the charging port 2 may be connected to the power grid). In other words, the bidirectional charger can implement bidirectional charging. In the first charging mode, an alternating current from the charging port 2 is converted into a direct current after passing through the power factor correction circuit 11, the direct current is converted into an alternating current after passing through the first voltage conversion circuit 31, a voltage of the alternating current changes after the alternating current passes through the first transformer 41, the alternating current with the changed voltage is converted into a direct current after passing through the second voltage conversion circuit 32, and the direct current is used to charge the electricity storage unit 5. In the second charging mode, a direct current from the electricity storage unit 5 is converted into an alternating current after passing through the second voltage conversion circuit 32, a voltage of the alternating current changes after the alternating current passes through the first transformer 42, the alternating current with the changed voltage is converted into a direct current after passing through the first voltage conversion circuit 31, the direct current is converted into an alternating current after passing through the power factor correction circuit 11, and the alternating current charges the power grid by using the charging port 2. In the bidirectional charging mode, the excitation generator 7 is not driven to work. In the motor-driven mode, the first switch unit 81 is on; in other words, the multiplexing node and the excitation generator 7 are connected. For example, the multiplexing node A is located between the power factor correction circuit 11 and the first voltage conversion circuit 31. In this mode, a direct current output by the electricity storage unit 5 is converted into an alternating current after passing through the second voltage conversion circuit 32, a voltage of the alternating current changes after the alternating current passes through the first transformer 42, the alternating current with the changed voltage is converted into a direct current after passing through the first voltage conversion circuit 31, and after the direct current passes through the excitation drive component 6, an exciting current is formed to drive the excitation generator 7. In other words, in the structure shown in FIG. 4, time division multiplexing is implemented for a part including the first voltage conversion circuit 31, the first transformer 41, and the second voltage conversion circuit 32 between the bidirectional charging mode and the motor-driven mode, and the bidirectional charging mode and the motor-driven mode are separately used to implement different voltage conversion functions. Time-division multiplexing is controlled by the first switch unit 81.

It should be noted that FIG. 4 shows only a structure in which the multiplexing node A is located between the power factor correction circuit 11 and the first voltage conversion circuit 31. In another implementation, the multiplexing node A may alternatively be at another location provided that the multiplexing node A is located on a path between the charging port 2 and the second voltage conversion circuit 32 in the bidirectional charger 1. For example, the multiplexing node A may alternatively be located between the charging port 2 and the power factor correction circuit 11, between the first voltage conversion circuit 31 and the first transformer 41, or between the first transformer 41 and the second voltage conversion circuit 32. The location of the multiplexing node A may be specifically set as required.

In the motor-driven system in this embodiment of this application, the multiplexing node is connected by using a first switch, and the multiplexing node is located between the second voltage conversion circuit in the bidirectional charger and the charging port; in other words, a partial circuit that is in the bidirectional charger and that includes at least the second voltage conversion circuit may be multiplexed as a structure of a partial circuit required by the excitation generator. The partial circuit in the bidirectional charger is used in an integrated manner of time division multiplexing, so that a circuit structure in the motor-driven system is simplified, costs are reduced, a weight and a size of the motor-driven system are reduced, and heat emission is reduced. This helps increase mileage of a vehicle.

Optionally, as shown in FIG. 4, the multiplexing node A is located on a path between the power factor correction circuit 11 and the first voltage conversion circuit 31. Between the charging port 2 and the second voltage conversion circuit 32, electric energy output by the electricity storage unit 5 is converted into a direct current only when the electric energy reaches the path between the power factor correction circuit 11 and the first voltage conversion circuit 31. Therefore, for the excitation drive component 6 that needs to use a direct current as an input, the multiplexing node A needs to be disposed on the path between the power factor correction circuit 11 and the first voltage conversion circuit 31.

Optionally, as shown in FIG. 4, the excitation drive component 6 includes a carbon brush or a slip ring, the carbon brush or the slip ring is electrically connected between the first switch unit 81 and the excitation generator 7, an input terminal of the carbon brush or the slip ring is electrically connected to the multiplexing node A by using the first switch unit 81, and an output terminal of the carbon brush or the slip ring is configured to transmit electric energy to the excitation generator 7 to drive the excitation generator 7. Input electric energy required by a rotary connector structure such as the carbon brush or the slip ring is a direct current. Therefore, the multiplexing node A is disposed on the path between the power factor correction circuit 11 and the first voltage conversion circuit 31.

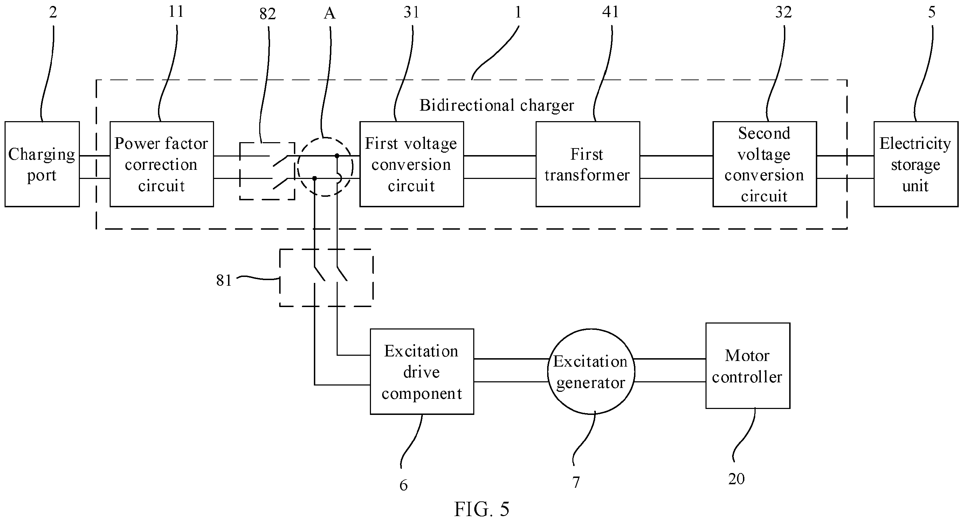

Optionally, FIG. 5 is a block diagram of a structure of another motor-driven system according to an embodiment of this application. Differences between the structures shown in FIG. 5 and FIG. 4 lie in that the motor-driven system in FIG. 5 further includes a second switch unit 82, the second switch unit 82 is located between the power factor correction circuit 11 and the first voltage conversion circuit 31, and the multiplexing node A is electrically connected to the second terminal of the power factor correction circuit 11 by using the second switch unit 82. When the motor-driven system works in the bidirectional charging mode, the second switch unit 82 is on, so that the power factor correction circuit 11 and the first voltage conversion circuit 31 are connected. When the motor-driven system works in the motor-driven mode, the second switch unit 82 is off, so that the power factor correction circuit 11 and the first voltage conversion circuit 31 are disconnected, to avoid adverse impact exerted by the power factor correction circuit 11 on a process of driving the excitation generator 7.

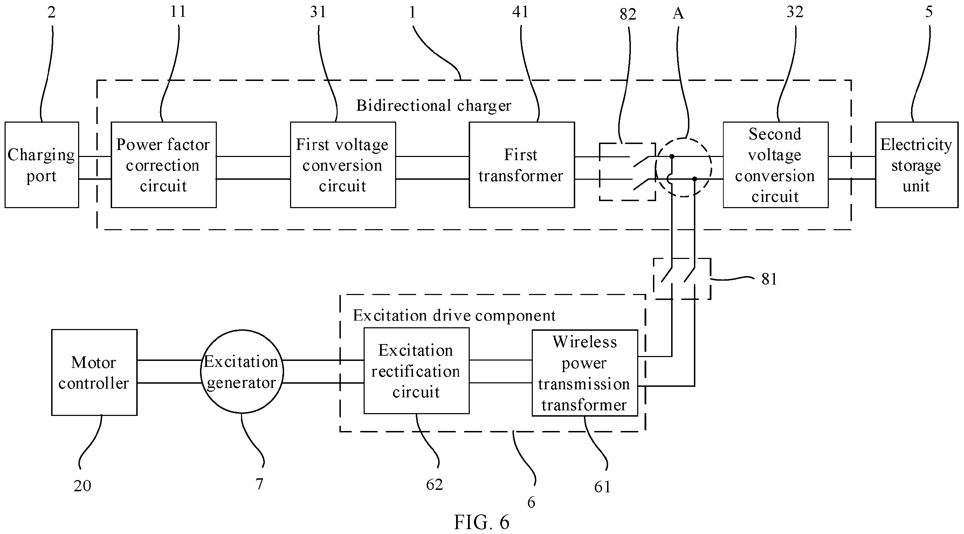

Optionally, FIG. 6 is a block diagram of a structure of another motor-driven system according to an embodiment of this application. This embodiment of this application provides a motor-driven system, including a bidirectional charger 1, an excitation drive component 6, and a motor controller 20. The bidirectional charger 1 includes: a power factor correction circuit 11, where a first terminal of the power factor correction circuit 11 is electrically connected to a charging port 2; a first voltage conversion circuit 31, where a first terminal of the first voltage conversion circuit 31 is electrically connected to a second terminal of the power factor correction circuit 11, the first terminal of the first voltage conversion circuit 31 is configured to input or output a direct current, and a second terminal of the first voltage conversion circuit 31 is configured to input or output an alternating current, in other words, the first voltage conversion circuit 31 is configured to convert a direct current of the first terminal of the first voltage conversion circuit 31 into an alternating current of the second terminal of the first voltage conversion circuit 31 or convert an alternating current of the second terminal of the first voltage conversion circuit 31 into a direct current of the first terminal of the first voltage conversion circuit 31; a first transformer 41, where a first terminal of the first transformer 41 is electrically connected to the second terminal of the first voltage conversion circuit 31, and the first transformer 41 is configured to convert a voltage of an alternating current; and a second voltage conversion circuit 32, where a first terminal of the second voltage conversion circuit 32 is electrically connected to a second terminal of the first transformer 41, the first terminal of the second voltage conversion circuit 32 is configured to input or output an alternating current, and a second terminal of the second voltage conversion circuit 32 is configured to input or output a direct current, in other words, the second voltage conversion circuit 32 is configured to convert an alternating current of the first terminal of the second voltage conversion circuit 32 into a direct current of the second terminal of the second voltage conversion circuit 32 or convert a direct current of the second terminal of the second voltage conversion circuit 32 into an alternating current of the first terminal of the second voltage conversion circuit 32, and the second terminal of the second voltage conversion circuit 32 is configured to electrically connect to the electricity storage unit 5. The excitation drive component 6 is connected to a multiplexing node A by using a first switch unit 81, the multiplexing node A is located between the first voltage conversion circuit 31 and the second voltage conversion circuit 32, the excitation drive component 6 is configured to drive the excitation generator 7, and the motor controller 20 is configured to control the excitation generator 7.

Specifically, on a path between the charging port 2 and the second voltage conversion circuit 32, electric energy output by the electricity storage unit 5 is converted into a direct current only when the electric energy reaches a path between the first voltage conversion circuit 31 and the second voltage conversion circuit 32. Therefore, for the excitation drive component 6 that needs to use an alternating current as an input, the multiplexing node A needs to be disposed on the path between the first voltage conversion circuit 31 and the second voltage conversion circuit 32.

Optionally, as shown in FIG. 6, the excitation drive component 6 includes: a wireless power transmission transformer 61, where a primary side of the wireless power transmission transformer 61 is electrically connected to the multiplexing node A by using the first switch unit 81, and a secondary side of the wireless power transmission transformer 61 is configured to receive electric energy transmitted by the primary side of the wireless power transmission transformer 61; and an excitation rectification circuit 62, where an input terminal of the excitation rectification circuit 62 is electrically connected to the secondary side of the wireless power transmission transformer 61, and an output terminal of the excitation rectification circuit 62 is configured to electrically connect to the excitation generator 7. Input electric energy required by a structure such as the wireless power transmission transformer 61 is an alternating current. Therefore, the multiplexing node A is disposed on the path between the first voltage conversion circuit 31 and the second voltage conversion circuit 32.

Optionally, as shown in FIG. 6, the multiplexing node A is located between the first transformer 41 and the second voltage conversion circuit 32. When the motor-driven system works in a motor-driven mode, an alternating current can be generated on the path between the first voltage conversion circuit 31 and the second voltage conversion circuit 32. However, when a small quantity of components actually access the excitation drive component 6, a small electric energy loss is caused. Therefore, when the multiplexing node A is disposed on a path between the first transformer 41 and the second voltage conversion circuit 32, an electric energy loss in the motor-driven mode can be further reduced.

Optionally, as shown in FIG. 6, the motor-driven system further includes a second switch unit 82. The second switch unit 82 is disposed on a path between the power factor correction circuit 11 and the second voltage conversion circuit 32, and the multiplexing node A is electrically connected to the second terminal of the first transformer 41 by using the second switch unit 82. When the motor-driven system works in a bidirectional charging mode, the second switch unit 82 is on, so that the first transformer 41 and the second voltage conversion circuit 32 are connected. When the motor-driven system works in the motor-driven mode, the second switch unit 82 is off, so that the first transformer 41 and the second voltage conversion circuit 32 are disconnected, to avoid adverse impact exerted by another component on a left side of the second voltage conversion circuit 32 in the bidirectional charger 1 on a process of driving the excitation generator 7.

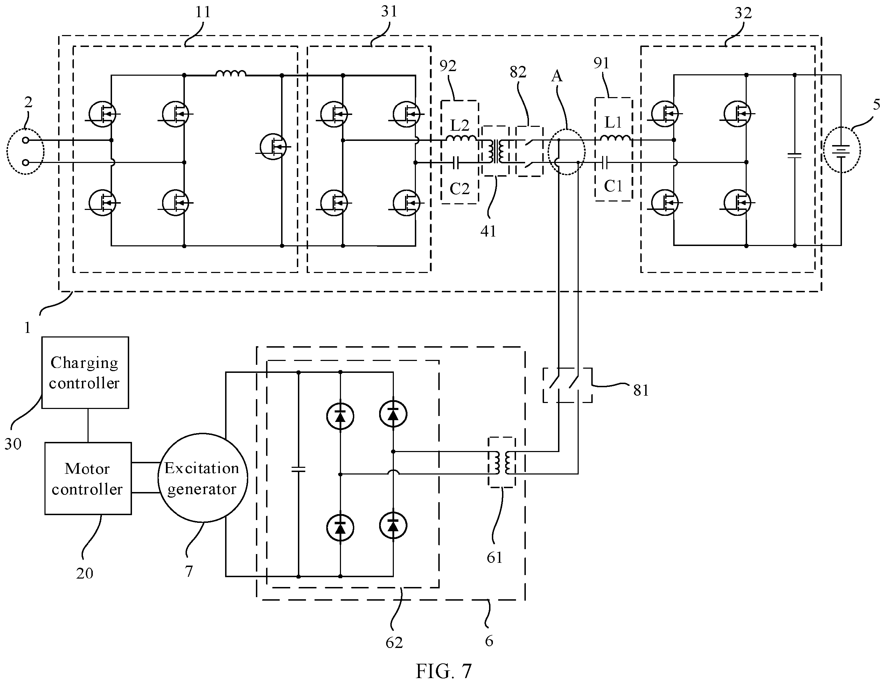

Optionally, FIG. 7 is a schematic diagram of a circuit structure corresponding to the motor-driven system in FIG. 6. The motor-driven system further includes a first resonant unit 91, and the first resonant unit 91 is electrically connected between the multiplexing node A and the second voltage conversion circuit 32. The first resonant unit 91 is configured to implement a resonance function in both the motor-driven mode and the bidirectional charging mode; in other words, the first resonant unit 91 is multiplexed in both the motor-driven mode and the bidirectional charging mode.

Specifically, the first resonant unit 91 may include a first inductor L1 and a first capacitor C1, and the first inductor L1 and the first capacitor C1 are connected in series on two branches. In addition, the motor-driven system may further include a second resonant unit 92, and the second resonant unit 92 is electrically connected on a path between the first voltage conversion circuit 31 and the first transformer 41. The second resonant unit 92 may include a second inductor L2 and a second capacitor C2, and the second inductor L2 and the second capacitor C2 are connected in series on two branches. The first resonant unit 91, the first transformer 41, and the second resonant unit 92 may form a resonant voltage conversion circuit. In another implementation, the multiplexing node A may be disposed on a path between the first resonant unit 91 and the second voltage conversion circuit 32, or may be disposed on a path between the second resonant unit 92 and the first transformer 41, or may be disposed on a path between the first voltage conversion circuit 31 and the second resonant unit 92. FIG. 7 shows specific circuit structures of the power factor correction circuit 11, the first voltage conversion circuit 31, the second voltage conversion circuit 32, and the excitation rectification circuit 62. For example, the first voltage conversion circuit 31 and the second voltage conversion circuit 32 each are a full-bridge circuit. It should be noted that specific circuit structures in the foregoing circuit modules are merely examples. A specific structure of each circuit is not limited in this embodiment of this application provided that a corresponding function can be implemented.

Optionally, as shown in FIG. 7, the motor-driven system further includes: a motor controller 20 configured to control the excitation generator 7, and a charging controller 30 configured to control the bidirectional charger 1. The charging controller 30 and the motor controller 20 are in a communication connection, and the charging controller 30 is further configured to: when the bidirectional charger 1 is in the bidirectional charging mode, control the first switch unit 81 to be off; and when the charging controller 30 receives a vehicle start signal, control the first switch unit 81 to be on. The charging controller 30 is further configured to control the first switch unit 81 in addition to controlling the bidirectional charger 1. For example, when a current is detected on the charging port 2, it indicates that the bidirectional charger 1 is in the bidirectional charging mode, and in this case, the first switch unit 81 is controlled to be off to perform a bidirectional charging process; and when the vehicle start signal is detected, the first switch unit 81 is controlled to be on to perform a motor driving process. These two processes do not appear at the same time. In addition, the communication connection between the charging controller 30 and the motor controller 20 is to implement feedback and control between the bidirectional charger 1 and the excitation generator 7 in the motor-driven mode, and the communication connection between the charging controller 30 and the motor controller 20 includes a wired communication connection manner and a wireless communication connection manner.

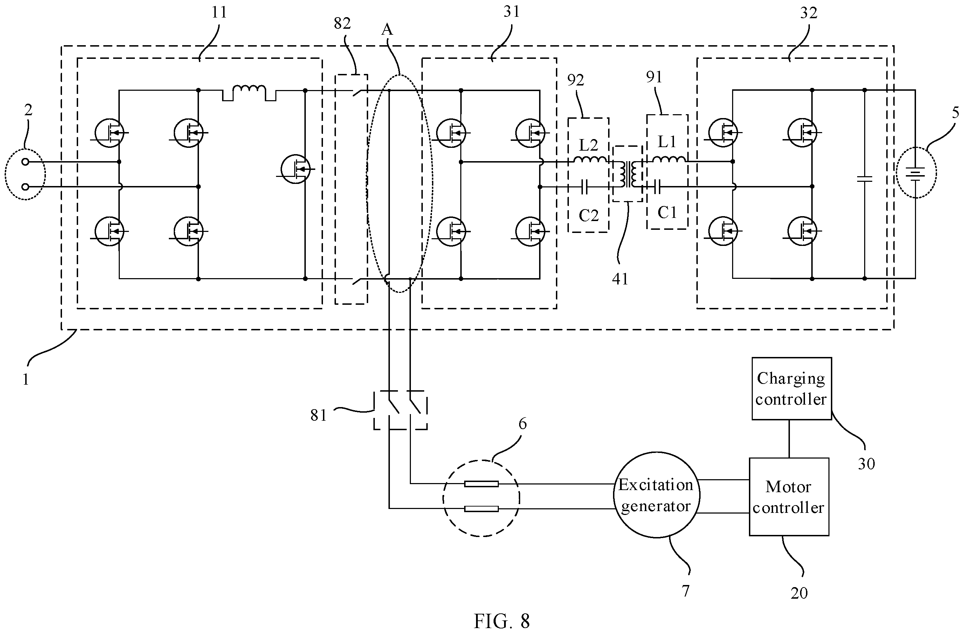

Optionally, as shown in FIG. 7 and FIG. 8, FIG. 8 is a schematic diagram of a circuit structure corresponding to the motor-driven system in FIG. 5. The motor-driven system further includes: a motor controller 20 configured to control the excitation generator 7, and a charging controller 30 configured to control the bidirectional charger 1. The charging controller 30 and the motor controller 20 are in a communication connection, and the charging controller 30 is further configured to: when the bidirectional charger 1 is in the bidirectional charging mode, control the first switch unit 81 to be off, and control the second switch unit 82 to be on; and when the charging controller 30 receives a vehicle start signal, control the first switch unit 81 to be on, and control the second switch unit 82 to be off.

Optionally, as shown in FIG. 7, the excitation drive component 6 includes: a wireless power transmission transformer 61, where a primary side of the wireless power transmission transformer 61 is electrically connected to the multiplexing node A by using the first switch unit 81, and a secondary side of the wireless power transmission transformer 61 is configured to receive electric energy transmitted by the primary side of the wireless power transmission transformer 61; and an excitation rectification circuit 62, where an input terminal of the excitation rectification circuit 62 is electrically connected to the secondary side of the wireless power transmission transformer 61, and an output terminal of the excitation rectification circuit 62 is configured to electrically connect to the excitation generator 7. The charging controller 30 is further configured to receive the electric energy transmitted by the primary side of the wireless power transmission transformer 61. The charging controller 30 obtains output electric energy of the wireless power transmission transformer 61 by using a wireless carrier, to further obtain information feedback of an excitation current, and may further perform control based on the information feedback of the excitation current. If a feedback signal is obtained by using a wireless carrier, no connection component needs to be disposed. In another implementation, a communication connection may be established between the charging controller 30 and the excitation rectification circuit 62 in another manner such as a wired manner, to implement information feedback of the excitation current.

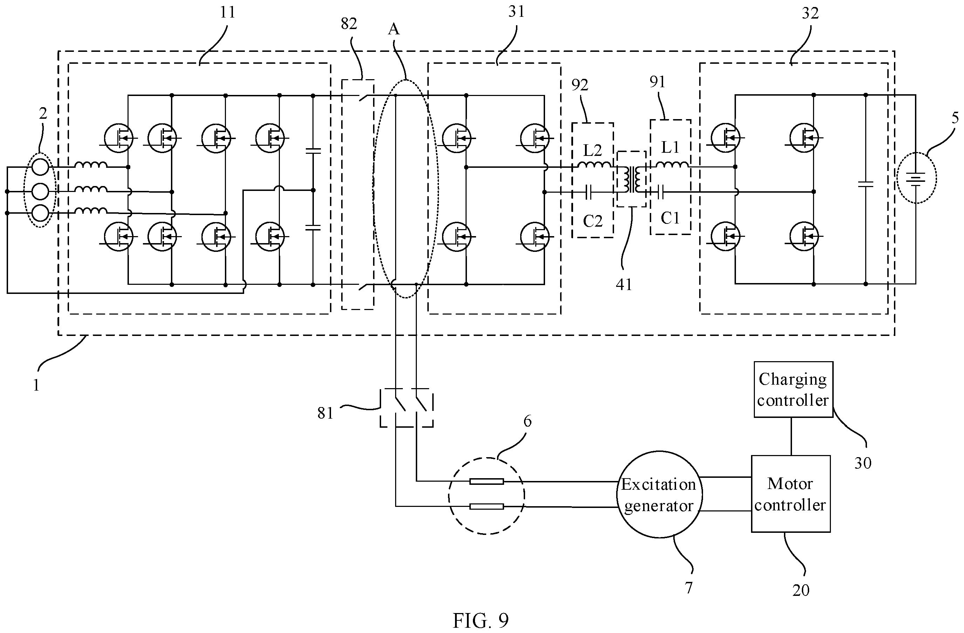

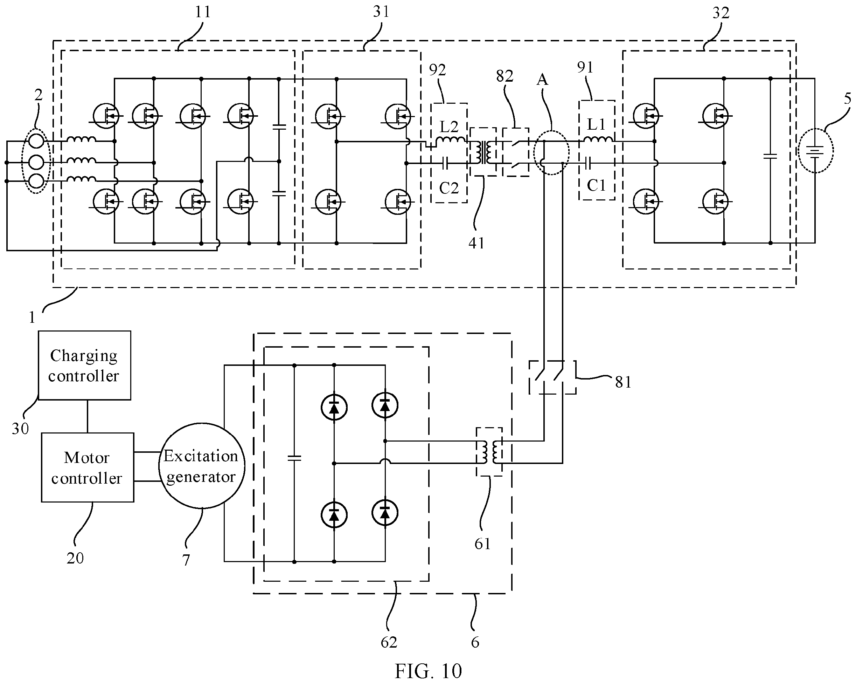

Optionally, as shown in FIG. 7 and FIG. 8, the power factor correction circuit 11 is a power factor correction circuit for a two-phase alternating current. Alternatively, as shown in FIG. 9 and FIG. 10, FIG. 9 is a schematic diagram of another circuit structure corresponding to the motor-driven system in FIG. 5, FIG. 10 is a schematic diagram of another circuit structure corresponding to the motor-driven system in FIG. 6, and the power factor correction circuit 11 is a power factor correction circuit for a three-phase alternating current. Compared with the two-phase alternating current, the three-phase alternating current can further improve a power level of the bidirectional charger.

An embodiment of this application further provides a vehicle, and the vehicle includes an excitation generator 7 and the motor-driven system in any one of the foregoing embodiments.

In this embodiment of this application, "at least one" means one or more, and "a plurality of" means two or at least two. The term "and/or" describes an association relationship for describing associated objects and represents that three relationships may exist. For example, A and/or B may represent the following three cases: Only A exists, both A and B exist, and only B exists. A and B may be in a singular form or a plural form. The character "/" usually indicates an "or" relationship between the associated objects. At least one of the following items and similar expressions refer to any combination of the items, including a single item or any combination of plural items. For example, at least one of a, b, and c may indicate a, b, c, a and b, a and c, b and c, or a, b, and c, where a, b, and c may be singular or plural.

The foregoing descriptions are merely preferred embodiments of this application, but are not intended to limit this application. The protection scope of this application is defined by the claims.

## Claims

1. A motor-driven system, comprising:
a bidirectional charger (1), wherein the bidirectional charger (1) comprises:
a power factor correction circuit (11), wherein a first terminal of the power factor correction circuit (11) is configured to electrically connect to a charging port (2);
a first voltage conversion circuit (31), wherein a first terminal of the first voltage conversion circuit (31) is electrically connected to a second terminal of the power factor correction circuit (11), the first terminal of the first voltage conversion circuit (31) is configured to input or output a direct current, and a second terminal of the first voltage conversion circuit (31) is configured to input or output an alternating current;
a first transformer (41), wherein a first terminal of the first transformer (41) is electrically connected to the second terminal of the first voltage conversion circuit (31); and
a second voltage conversion circuit (32), wherein a first terminal of the second voltage conversion circuit (32) is electrically connected to a second terminal of the first transformer (41), the first terminal of the second voltage conversion circuit (32) is configured to input or output an alternating current, a second terminal of the second voltage conversion circuit (32) is configured to output or input a direct current, and the second terminal of the second voltage conversion circuit (32) is configured to electrically connect to an electricity storage unit (5); wherein
the motor-driven system further comprises:
an excitation drive component (6) configured to drive an excitation generator (7), wherein the excitation drive component (6) is electrically connected to a multiplexing node by using a first switch unit (81),
**characterized in that**
the multiplexing node is located between the power factor correction circuit (11) and the first voltage conversion circuit (31).

2. The motor-driven system according to claim 1, wherein
the excitation drive component (6) comprises a carbon brush or a slip ring, an input terminal of the carbon brush or the slip ring is electrically connected to the multiplexing node by using the first switch unit (81), and an output terminal of the carbon brush or the slip ring is configured to drive the excitation generator (7).

3. The motor-driven system according to claim 1 or 2, further comprising:
a second switch unit (82), wherein the second switch unit (82) is located between the power factor correction circuit (11) and the first voltage conversion circuit (31), and the multiplexing node is electrically connected to the second terminal of the power factor correction circuit (11) by using the second switch unit (82).

4. A motor-driven system, comprising:
a bidirectional charger (1), wherein the bidirectional charger (1) comprises:
a power factor correction circuit (11), wherein a first terminal of the power factor correction circuit (11) is configured to electrically connect to a charging port (2);
a first voltage conversion circuit (31), wherein a first terminal of the first voltage conversion circuit (31) is electrically connected to a second terminal of the power factor correction circuit (11), the first terminal of the first voltage conversion circuit (31) is configured to input or output a direct current, and a second terminal of the first voltage conversion circuit (31) is configured to input or output an alternating current;
a first transformer (41), wherein a first terminal of the first transformer (41) is electrically connected to the second terminal of the first voltage conversion circuit (31); and
a second voltage conversion circuit (32), wherein a first terminal of the second voltage conversion circuit (32) is electrically connected to a second terminal of the first transformer (41), the first terminal of the second voltage conversion circuit (32) is configured to input or output an alternating current, a second terminal of the second voltage conversion circuit (32) is configured to output or input a direct current, and the second terminal of the second voltage conversion circuit (32) is configured to electrically connect to an electricity storage unit (5); wherein
the motor-driven system further comprises:
an excitation drive component (6) configured to drive an excitation generator (7), wherein the excitation drive component is electrically connected to a multiplexing node by using a first switch unit (81),
**characterized in that**
the multiplexing node is located between the first voltage conversion circuit (31) and the second voltage conversion circuit (32).

5. The motor-driven system according to claim 4, wherein
the excitation drive component (6) comprises:
a wireless power transmission transformer (61), wherein a primary side of the wireless power transmission transformer (61) is electrically connected to the multiplexing node by using the first switch unit (81), and a secondary side of the wireless power transmission transformer (61) is configured to receive electric energy transmitted by the primary side; and
an excitation rectification circuit (62), wherein an input terminal of the excitation rectification circuit (62) is electrically connected to the secondary side of the wireless power transmission transformer (61), and an output terminal of the excitation rectification circuit (62) is configured to drive the excitation generator (7).

6. The motor-driven system according to claim 4 or 5, wherein
the multiplexing node is located between the first transformer (41) and the second voltage conversion circuit (32).

7. The motor-driven system according to claim 6, further comprising:
a second switch unit (82), wherein the second switch unit (82) is located between the power factor correction circuit (11) and the second voltage conversion circuit (32), and the multiplexing node is electrically connected to the second terminal of the first transformer (41) by using the second switch unit (82).

8. The motor-driven system according to claim 7, further comprising:
a first resonant unit (91), wherein the first resonant unit is electrically connected between the multiplexing node and the second voltage conversion circuit (32).

9. The motor-driven system according to any one of claims 1 to 8, further comprising:
a motor controller (20) configured to control the excitation generator (7); and
a charging controller (30) configured to control the bidirectional charger (2), wherein the charging controller (30) and the motor controller (20) are in a communication connection, and the charging controller (30) is further configured to: when the bidirectional charger (2) is in a bidirectional charging mode, control the first switch unit (81) to be off; and when the charging controller (30) receives a vehicle start signal, control the first switch unit (81) to be on.

10. The motor-driven system according to any one of claims 3, 7, and 8, further comprising:
a motor controller (20) configured to control the excitation generator (7); and
a charging controller (30) configured to control the bidirectional charger (2), wherein the charging controller (30) and the motor controller (20) are in a communication connection, and the charging controller (30) is further configured to: when the bidirectional charger (2) is in a bidirectional charging mode, control the first switch unit (81) to be off and control the second switch unit (82) to be on; and when the charging controller (30) receives a vehicle start signal, control the first switch unit (81) to be on and control the second switch unit (82) to be off.

11. The motor-driven system according to any one of claims 1 to 10, wherein
the power factor correction circuit (11) is a power factor correction circuit for a two-phase alternating current or a power factor correction circuit for a three-phase alternating current.

12. A vehicle, comprising an excitation generator and the motor-driven system according to any one of claims 1 to 11.

## Patentansprüche

1. Motorgetriebenes System, umfassend:
ein bidirektionales Ladegerät (1), wobei das bidirektionale Ladegerät (1) umfasst:
eine Leistungsfaktor-Korrekturschaltung (11), wobei ein erster Anschluss der Leistungsfaktor-Korrekturschaltung (11) dafür ausgelegt ist, elektrisch mit einem Ladeanschluss (2) verbunden zu werden;
eine erste Spannungswandlerschaltung (31), wobei ein erster Anschluss der ersten Spannungswandlerschaltung (31) elektrisch mit einem zweiten Anschluss der Leistungsfaktor-Korrekturschaltung (11) verbunden ist, der erste Anschluss der ersten Spannungswandlerschaltung (31) dafür ausgelegt ist, einen Gleichstrom einzugeben oder auszugeben, und ein zweiter Anschluss der ersten Spannungswandlerschaltung (31) dafür ausgelegt ist, einen Wechselstrom einzugeben oder auszugeben,
einen ersten Transformator (41), wobei ein erster Anschluss des ersten Transformators (41) elektrisch mit dem zweiten Anschluss der ersten Spannungswandlerschaltung (31) verbunden ist; und
eine zweite Spannungswandlerschaltung (32), wobei ein erster Anschluss der zweiten Spannungswandlerschaltung (32) elektrisch mit einem zweiten Anschluss des ersten Transformators (41) verbunden ist, der erste Anschluss der zweiten Spannungswandlerschaltung (32) dafür ausgelegt ist, einen Wechselstrom einzugeben oder auszugeben, ein zweiter Anschluss der zweiten Spannungswandlerschaltung (32) dafür ausgelegt ist, einen Gleichstrom auszugeben oder einzugeben, und der zweite Anschluss der zweiten Spannungswandlerschaltung (32) dafür ausgelegt ist, elektrisch mit einer Stromspeichereinheit (5) verbunden zu werden; wobei
das motorgetriebene System ferner umfasst:
eine Erregungsansteuerkomponente (6), die dafür ausgelegt ist, einen Erregungsgenerator (7) anzusteuern,
wobei die Erregungsansteuerkomponente (6) unter Verwendung einer ersten Schalteinheit (81) elektrisch mit einem Multiplexing-Knoten verbunden ist, **dadurch gekennzeichnet, dass**
der Multiplexing-Knoten zwischen der Leistungsfaktor-Korrekturschaltung (11) und der ersten Spannungswandlerschaltung (31) angeordnet ist.

2. Motorgetriebenes System gemäß Anspruch 1, wobei
die Erregungsansteuerkomponente (6) eine Kohlebürste oder einen Schleifring umfasst, ein Eingangsanschluss der Kohlebürste oder des Schleifrings unter Verwendung der ersten Schalteinheit (81) elektrisch mit dem Multiplexing-Knoten verbunden ist und ein Ausgangsanschluss der Kohlebürste oder des Schleifrings dafür ausgelegt ist, den Erregungsgenerator (7) anzusteuern.

3. Motorgetriebenes System gemäß Anspruch 1 oder 2, ferner umfassend:
eine zweite Schalteinheit (82), wobei die zweite Schalteinheit (82) zwischen der Leistungsfaktor-Korrekturschaltung (11) und der ersten Spannungswandlerschaltung (31) angeordnet ist und der Multiplexing-Knoten unter Verwendung der zweiten Schalteinheit (82) elektrisch mit dem zweiten Anschluss der Leistungsfaktor-Korrekturschaltung (11) verbunden ist.

4. Motorgetriebenes System, umfassend:
ein bidirektionales Ladegerät (1), wobei das bidirektionale Ladegerät (1) umfasst:
eine Leistungsfaktor-Korrekturschaltung (11), wobei ein erster Anschluss der Leistungsfaktor-Korrekturschaltung (11) dafür ausgelegt ist, elektrisch mit einem Ladeanschluss (2) verbunden zu werden;
eine erste Spannungswandlerschaltung (31), wobei ein erster Anschluss der ersten Spannungswandlerschaltung (31) elektrisch mit einem zweiten Anschluss der Leistungsfaktor-Korrekturschaltung (11) verbunden ist, der erste Anschluss der ersten Spannungswandlerschaltung (31) dafür ausgelegt ist, einen Gleichstrom einzugeben oder auszugeben, und ein zweiter Anschluss der ersten Spannungswandlerschaltung (31) dafür ausgelegt ist, einen Wechselstrom einzugeben oder auszugeben,
einen ersten Transformator (41), wobei ein erster Anschluss des ersten Transformators (41) elektrisch mit dem zweiten Anschluss der ersten Spannungswandlerschaltung (31) verbunden ist; und
eine zweite Spannungswandlerschaltung (32), wobei ein erster Anschluss der zweiten Spannungswandlerschaltung (32) elektrisch mit einem zweiten Anschluss des ersten Transformators (41) verbunden ist, der erste Anschluss der zweiten Spannungswandlerschaltung (32) dafür ausgelegt ist, einen Wechselstrom einzugeben oder auszugeben, ein zweiter Anschluss der zweiten Spannungswandlerschaltung (32) dafür ausgelegt ist, einen Gleichstrom auszugeben oder einzugeben, und der zweite Anschluss der zweiten Spannungswandlerschaltung (32) dafür ausgelegt ist, elektrisch mit einer Stromspeichereinheit (5) verbunden zu werden; wobei
das motorgetriebene System ferner umfasst:
eine Erregungsansteuerkomponente (6), die dafür ausgelegt ist, einen Erregungsgenerator (7) anzusteuern,
wobei die Erregungsansteuerkomponente unter Verwendung einer ersten Schalteinheit (81) elektrisch mit einem Multiplexing-Knoten verbunden ist, **dadurch gekennzeichnet, dass**
der Multiplexing-Knoten zwischen der ersten Spannungswandlerschaltung (31) und der zweiten Spannungswandlerschaltung (32) angeordnet ist.

5. Motorgetriebenes System gemäß Anspruch 4, wobei
die Erregungsansteuerkomponente (6) umfasst:
einen drahtlosen Leistungsübertragungs-Transformator (61), wobei eine Primärseite des drahtlosen Leistungsübertragungs-Transformators (61) unter Verwendung der ersten Schalteinheit (81) elektrisch mit dem Multiplexing-Knoten verbunden ist und eine Sekundärseite des drahtlosen Leistungsübertragungs-Transformators (61) dafür ausgelegt ist, von der Primärseite übertragene elektrische Energie zu empfangen; und
eine Erregungsgleichrichtschaltung (62),
wobei ein Eingangsanschluss der Erregungsgleichrichtschaltung (62) elektrisch mit der Sekundärseite des drahtlosen Leistungsübertragungs-Transformators (61) verbunden ist und ein Ausgangsanschluss der Erregungsgleichrichtschaltung (62) dafür ausgelegt ist, den Erregungsgenerator (7) anzusteuern.

6. Motorgetriebenes System gemäß Anspruch 4 oder 5, wobei der Multiplexing-Knoten zwischen dem ersten Transformator (41) und der zweiten Spannungswandlerschaltung (32) angeordnet ist.

7. Motorgetriebenes System gemäß Anspruch 6, ferner umfassend:
eine zweite Schalteinheit (82), wobei die zweite Schalteinheit (82) zwischen der Leistungsfaktor-Korrekturschaltung (11) und der zweiten Spannungswandlerschaltung (32) angeordnet ist und der Multiplexing-Knoten unter Verwendung der zweiten Schalteinheit (82) elektrisch mit dem zweiten Anschluss des ersten Transformators (41) verbunden ist.

8. Motorgetriebenes System gemäß Anspruch 7, ferner umfassend:
eine erste Resonanzeinheit (91), wobei die erste Resonanzeinheit elektrisch zwischen den Multiplexing-Knoten und die zweite Spannungswandlerschaltung (32) geschaltet ist.

9. Motorgetriebenes System gemäß einem der Ansprüche 1 bis 8, ferner umfassend:
eine Motorsteuerung (20), die dafür ausgelegt ist, den Erregungsgenerator (7) zu steuern, und
eine Ladesteuerung (30), die dafür ausgelegt ist, das bidirektionale Ladegerät (2) zu steuern, wobei die Ladesteuerung (30) und die Motorsteuerung (20) in Kommunikationsverbindung stehen und die Ladesteuerung (30) ferner dafür ausgelegt ist: wenn sich das bidirektionale Ladegerät (2) in einem bidirektionalen Lademodus befindet, die erste Schalteinheit (81) so zu steuern, dass sie ausgeschaltet ist, und wenn die Ladesteuerung (30) ein Fahrzeugstartsignal empfängt, die erste Schalteinheit (81) so zu steuern, dass sie eingeschaltet ist.

10. Motorgetriebenes System gemäß einem der Ansprüche 3, 7 und 8, ferner umfassend:
eine Motorsteuerung (20), die dafür ausgelegt ist, den Erregungsgenerator (7) zu steuern, und
eine Ladesteuerung (30), die dafür ausgelegt ist, das bidirektionale Ladegerät (2) zu steuern, wobei die Ladesteuerung (30) und die Motorsteuerung (20) in Kommunikationsverbindung stehen und die Ladesteuerung (30) ferner dafür ausgelegt ist: wenn sich das bidirektionale Ladegerät (2) in einem bidirektionalen Lademodus befindet, die erste Schalteinheit (81) so zu steuern, dass sie ausgeschaltet ist, und die zweite Schalteinheit (82) so zu steuern, dass sie eingeschaltet ist, und wenn die Ladesteuerung (30) ein Fahrzeugstartsignal empfängt, die erste Schalteinheit (81) so zu steuern, dass sie eingeschaltet ist, und die zweite Schalteinheit (82) so zu steuern, dass sie ausgeschaltet ist.

11. Motorgetriebenes System gemäß einem der Ansprüche 1 bis 10, wobei
die Leistungsfaktor-Korrekturschaltung (11) eine Leistungsfaktor-Korrekturschaltung für einen Zweiphasen-Wechselstrom oder eine Leistungsfaktor-Korrekturschaltung für einen Dreiphasen-Wechselstrom ist.

12. Fahrzeug, das einen Erregungsgenerator und das motorgetriebene System gemäß einem der Ansprüche 1 bis 11 umfasst.

## Revendications

1. Système motorisé, comprenant :
un chargeur bidirectionnel (1), dans lequel le chargeur bidirectionnel (1) comprend :
un circuit de correction de facteur de puissance (11), dans lequel une première borne du circuit de correction de facteur de puissance (11) est configurée pour se connecter électriquement à un port de charge (2) ;
un premier circuit de conversion de tension (31), dans lequel une première borne du premier circuit de conversion de tension (31) est connectée électriquement à une seconde borne du circuit de correction de facteur de puissance (11), la première borne du premier circuit de conversion de tension (31) est configurée pour entrer ou sortir un courant continu, et une seconde borne du premier circuit de conversion de tension (31) est configurée pour entrer ou sortir un courant alternatif ;
un premier transformateur (41), dans lequel une première borne du premier transformateur (41) est connectée électriquement à la seconde borne du premier circuit de conversion de tension (31) ; et
un second circuit de conversion de tension (32), dans lequel une première borne du second circuit de conversion de tension (32) est connectée électriquement à une seconde borne du premier transformateur (41), la première borne du second circuit de conversion de tension (32) est configurée pour entrer ou sortir un courant alternatif,
une seconde borne du second circuit de conversion de tension (32) est configurée pour sortir ou entrer un courant continu, et la seconde borne du second circuit de conversion de tension (32) est configurée pour se connecter électriquement à une unité de stockage d'électricité (5) ;
le système motorisé comprenant en outre :
un composant d'attaque d'excitation (6) configuré pour attaquer un générateur d'excitation (7),
dans lequel le composant d'attaque d'excitation (6) est connecté électriquement à un noeud de multiplexage au moyen d'une première unité de commutation (81),
**caractérisé en ce que**
le noeud de multiplexage est situé entre le circuit de correction de facteur de puissance (11) et le premier circuit de conversion de tension (31).

2. Système motorisé selon la revendication 1, dans lequel
le composant d'attaque d'excitation (6) comprend un balai de charbon ou une bague collectrice, une borne d'entrée du balai de charbon ou de la bague collectrice est connectée électriquement au noeud de multiplexage au moyen de la première unité de commutation (81), et une borne de sortie du balai de charbon ou de la bague collectrice est configurée pour attaquer le générateur d'excitation (7).

3. Système motorisé selon la revendication 1 ou 2, comprenant en outre :
une seconde unité de commutation (82), dans lequel la seconde unité de commutation (82) est située entre le circuit de correction de facteur de puissance (11) et le premier circuit de conversion de tension (31), et le noeud de multiplexage est connecté électriquement à la seconde borne du circuit de correction de facteur de puissance (11) au moyen de la seconde unité de commutation (82).

4. Système motorisé, comprenant :
un chargeur bidirectionnel (1), dans lequel le chargeur bidirectionnel (1) comprend :
un circuit de correction de facteur de puissance (11), dans lequel une première borne du circuit de correction de facteur de puissance (11) est configurée pour se connecter électriquement à un port de charge (2) ;
un premier circuit de conversion de tension (31), dans lequel une première borne du premier circuit de conversion de tension (31) est connectée électriquement à une seconde borne du circuit de correction de facteur de puissance (11), la première borne du premier circuit de conversion de tension (31) est configurée pour entrer ou sortir un courant continu, et une seconde borne du premier circuit de conversion de tension (31) est configurée pour entrer ou sortir un courant alternatif ;
un premier transformateur (41), dans lequel une première borne du premier transformateur (41) est connectée électriquement à la seconde borne du premier circuit de conversion de tension (31) ; et
un second circuit de conversion de tension (32), dans lequel une première borne du second circuit de conversion de tension (32) est connectée électriquement à une seconde borne du premier transformateur (41), la première borne du second circuit de conversion de tension (32) est configurée pour entrer ou sortir un courant alternatif,
une seconde borne du second circuit de conversion de tension (32) est configurée pour sortir ou entrer un courant continu, et la seconde borne du second circuit de conversion de tension (32) est configurée pour se connecter électriquement à une unité de stockage d'électricité (5) ;
le système motorisé comprenant en outre :
un composant d'attaque d'excitation (6) configuré pour attaquer un générateur d'excitation (7),
dans lequel le composant d'attaque d'excitation est connecté électriquement à un noeud de multiplexage au moyen d'une première unité de commutation (81),
**caractérisé en ce que**
le noeud de multiplexage est situé entre le premier circuit de conversion de tension (31) et le second circuit de conversion de tension (32).

5. Système motorisé selon la revendication 4, dans lequel
le composant d'attaque d'excitation (6) comprend :
un transformateur de transmission de puissance sans fil (61), dans lequel un côté primaire du transformateur de transmission de puissance sans fil (61) est connecté électriquement au noeud de multiplexage au moyen de la première unité de commutation (81), et un côté secondaire du transformateur de transmission de puissance sans fil (61) est configuré pour recevoir l'énergie électrique transmise par le côté primaire ; et
un circuit de redressement d'excitation (62),
dans lequel une borne d'entrée du circuit de redressement d'excitation (62) est connectée électriquement au côté secondaire du transformateur de transmission de puissance sans fil (61), et une borne de sortie du circuit de redressement d'excitation (62) est configurée pour attaquer le générateur d'excitation (7).

6. Système motorisé selon la revendication 4 ou 5, dans lequel
le noeud de multiplexage est situé entre le premier transformateur (41) et le second circuit de conversion de tension (32).

7. Système motorisé selon la revendication 6, comprenant en outre :
une seconde unité de commutation (82), dans lequel la seconde unité de commutation (82) est située entre le circuit de correction de facteur de puissance (11) et le second circuit de conversion de tension (32), et le noeud de multiplexage est connecté électriquement à la seconde borne du premier transformateur (41) au moyen de la seconde unité de commutation (82).

8. Système motorisé selon la revendication 7, comprenant en outre :
une première unité résonante (91),
dans lequel la première unité résonante est connectée électriquement entre le noeud de multiplexage et le second circuit de conversion de tension (32).

9. Système motorisé selon l'une quelconque des revendications 1 à 8, comprenant en outre :
un contrôleur de moteur (20) configuré pour commander le générateur d'excitation (7) ; et
un contrôleur de charge (30) configuré pour commander le chargeur bidirectionnel (2), dans lequel le contrôleur de charge (30) et le contrôleur de moteur (20) sont dans une connexion de communication, et le contrôleur de charge (30) est en outre configuré pour : lorsque le chargeur bidirectionnel (2) est dans un mode de charge bidirectionnel, commander la première unité de commutation (81) pour qu'elle soit désactivée ; et
lorsque le contrôleur de charge (30) reçoit un signal de démarrage de véhicule, commander la première unité de commutation (81) pour qu'elle soit activée.

10. Système motorisé selon l'une quelconque des revendications 3, 7 et 8, comprenant en outre :
un contrôleur de moteur (20) configuré pour commander le générateur d'excitation (7) ; et
un contrôleur de charge (30) configuré pour commander le chargeur bidirectionnel (2), dans lequel le contrôleur de charge (30) et le contrôleur de moteur (20) sont dans une connexion de communication, et le contrôleur de charge (30) est en outre configuré pour : lorsque le chargeur bidirectionnel (2) est dans un mode de charge bidirectionnel, commander la première unité de commutation (81) pour qu'elle soit désactivée et commander la seconde unité de commutation (82) pour qu'elle soit activée ; et lorsque le contrôleur de charge (30) reçoit un signal de démarrage de véhicule, commander la première unité de commutation (81) pour qu'elle soit activée et commander la seconde unité de commutation (82) pour qu'elle soit désactivée.

11. Système motorisé selon l'une quelconque des revendications 1 à 10, dans lequel
le circuit de correction de facteur de puissance (11) est un circuit de correction de facteur de puissance pour un courant alternatif biphasé ou un circuit de correction de facteur de puissance pour un courant alternatif triphasé.

12. Véhicule, comprenant un générateur d'excitation et le système motorisé selon l'une quelconque des revendications 1 à 11.
